# EUROPEAN PATENT SPECIFICATION

(11) **EP 3 190 771 B1**
(45) Date of publication and mention of the grant of the patent: **04.03.2020**
(21) Application number: 14888767.2
(22) Date of filing: 13.11.2014
(51) Int. Cl.: H04L 29/08, H04L 12/26, H04L 12/58

(54) **METHOD AND DEVICE FOR MANAGING INSTANT COMMUNICATION APPLICATION PROGRAM, AND MOBILE TERMINAL THEREOF**
VERFAHREN UND VORRICHTUNG ZUR VERWALTUNG EINES SOFORTKOMMUNIKATIONSANWENDUNGSPROGRAMMS UND MOBILES ENDGERÄT DAFÜR
PROCÉDÉ ET DISPOSITIF DE GESTION DE PROGRAMME D'APPLICATION DE COMMUNICATION INSTANTANÉE ET TERMINAL MOBILE CORRESPONDANT

(30) Priority: 04.09.2014 CN 201410448740
(43) Date of publication of application: 12.07.2017
(73) Proprietor: ZTE Corporation, Shenzhen, Guangdong 518057 (CN)
(72) Inventor: HU, Haiqing, Shenzhen Guangdong 518057 (CN)
(74) Representative: Novagraaf Technologies
(86) International application number: PCT/CN2014/091054
(87) International publication number: WO 2015/154462

(56) References cited:
- EP-A1- 2 725 869
- EP-A1- 2 733 995
- EP-A1- 3 013 114
- WO-A1-2014/015797
- CN-A- 101 552 740
- CN-A- 102 547 936
- CN-A- 102 647 314
- CN-A- 103 139 303
- CN-A- 103 379 026
- CN-A- 103 561 179
- US-A1- 2014 003 372

## Description

### Technical Field

The present disclosure relates to the field of communication technology, and in particular, to a method and device for managing an instant communication application program, and a mobile terminal thereof.

### Background

With the development of mobile terminal, users can install or uninstall the instant communication application programs freely according to their own requirements, such as WeChat, QQ and MSN. In order to keep in touch between an instant communication application program server side at the network side and an instant communication application program client side at an upper Application Processor (AP) side of the mobile terminal. Although the AP side turns off the screen and enters a standby state, the instant communication application program client side of the AP side still always send a heartbeat packet to the instant communication application program server side, so that the instant communication application program server side of the network side knows the instant communication application program client at the AP side of the mobile terminal is online. In this case, the AP side of the mobile terminal is hard to really enter the standby state; so, when the users install on the mobile terminal the instant communication application programs, such as WeChat, QQ and MSN, and open and use them, these application programs usually keep online, which causes the high standby power consumption of the mobile terminal.

In order to reduce the power consumption due to frequently sending the heartbeat packet to the instant communication application program server side of the network side by the instant communication application program client side of the AP side, in most of the conventional techniques and methods, the heartbeat packets sent by each instant communication application program client side within the scheduled time are sent to the server after being intercepted and packed; or after heartbeat information is obtained through the interaction with the server, the number of heartbeat packets sent is decreased to reduce the power consumption; but this method cannot be completed independently without the cooperation of the network server side. Further, as the number of the instant communication application program clients on the mobile phone increases, the effect decreases.

### Summary

The embodiments of the present disclosure provide a method and device for managing an instant communication application program, and a mobile terminal thereof, which can reduce the power consumption of the instant communication application program during standby without needing the cooperation of the network server side.

The embodiments of the present disclosure provide a method for managing an instant communication application program, which includes the following steps:
when an upper-layer AP side of a mobile terminal is in a standby state, an instant communication application program is prevented from sending, via the upper-layer AP side, a heartbeat packet to a network server; and
the instant communication application program is replaced to send the heartbeat packet of the instant communication application program to the corresponding network server.

Preferably, after the heartbeat packet is sent to the network server, the method further includes that:
it is detected whether the upper-layer AP side is in the standby state, and a first detection result is obtained;
when the first detection result indicates that the upper-layer AP side is not in the standby state, a state recovery notification is sent to the upper-layer AP side, so that the instant communication application program sends, via the upper-layer AP side, the heartbeat packet to the network server again; and replacing the instant communication application program to send the heartbeat packet to the network server is stopped;
when the first detection result indicates that the upper-layer AP side is in the standby state, the step of replacing the instant communication application program to send the heartbeat packet of the instant communication application program to the corresponding network server is performed.

Preferably, before preventing the instant communication application program from sending the heartbeat packet to the network server, the method further includes that:
a notification of being about to enter the standby state is received from the upper AP side of the mobile terminal; and
the heartbeat packet is received from the instant communication application program.

Preferably, after the notification of being about to enter the standby state is received from the AP side of the mobile terminal, the method further includes that:
a wake-up signal is received at the upper-layer AP side; and
after the upper-layer AP side enters a wake-up state, a state recovery notification is sent, so that the instant communication application program sends, via the upper-layer AP side, the heartbeat packet to the network server again; and replacing the instant communication application program to send the heartbeat packet to the network server is stopped.

Preferably, when the instant communication application program is replaced to send the heartbeat packet of the instant communication application program to the corresponding network server, the instant communication application program is replaced, at a modem side of the mobile terminal, to send the heartbeat packet of the instant communication application program to the corresponding network server.

The embodiments of the present disclosure also provide a device for managing an instant communication application program, which includes:
a heartbeat packet sending preventing module, which is configured to, when the upper-layer AP side of the mobile terminal is in the standby state, prevent the instant communication application program from sending, via the upper-layer AP side, the heartbeat packet to the network server; and
a heartbeat packet sending replacing module, which is configured to replace the instant communication application program to send the heartbeat packet of the instant communication application program to the corresponding network server.

Preferably, the device further includes:
a standby state monitoring module, which is configured to detect whether the upper-layer AP side is in the standby state, and obtain the first detection result;
a state recovery notification sending module, which is configured to, when the first detection result indicates that the upper-layer AP side is not in the standby state, send the state recovery notification to the upper-layer AP side, so that the instant communication application program sends, via the upper-layer AP side, the heartbeat packet to the network server again; the state recovery notification sending module is further configured to, when the first detection result indicates that the upper-layer AP side is in the standby state, trigger the heartbeat packet sending replacing module;
the heartbeat packet sending replacing module is configured to, when the first detection result indicates that the upper-layer AP side is not in the standby state, stop replacing the instant communication application program to send the heartbeat packet to the network server.

Preferably, the device further includes:
a notification of being about to enter the standby state receiving module, which is configured to receive the notification of being about to enter the standby state from the upper-layer AP side of the mobile terminal; and
a heartbeat packet receiving module, which is configured to receive the heartbeat packet from the instant communication application program.

Preferably, the device further includes:
a wake-up signal receiving module, which is configured to receive the wake-up signal at the upper-layer AP side;
a state recovery notification sending module, which is configured to, after the upper-layer AP side enters the wake-up state, send the state recovery notification, so that the instant communication application program sends, via the upper-layer AP side, the heartbeat packet to the network server again;
the heartbeat packet sending replacing module is configured to, after the upper-layer AP side enters the wake-up state, stop replacing the instant communication application program to send the heartbeat packet to the network server.

Preferably, the heartbeat packet sending replacing module replaces, at the modem side of the mobile terminal, the instant communication application program to send the heartbeat packet of the instant communication application program to the corresponding network server.

The embodiments of the present disclosure also provide a mobile terminal, which includes: the upper AP and the device for managing the instant communication application program provided in above embodiments of the present disclosure.

The method and device for managing an instant communication application program, and the mobile terminal thereof which are provided by the embodiments of the present disclosure can replace the instant communication application program to send the heartbeat packet to the network server when the mobile terminal is in the standby state, thereby reducing the standby power consumption without needing the cooperation of the network server side and without changing the frequency of sending the heartbeat packet. The method and device for managing an instant communication application program, and the mobile terminal thereof can improve the power-saving effect without impacting the network connection of the instant communication application program in the standby state.

Document D1 (US 2014003372 A1) discloses "activating a mobile terminal from mobile network side".

### Brief Description of the Drawings

Fig. 1 shows a flowchart of a method for managing an instant communication application program according to an embodiment of the present disclosure;
Fig. 2 shows a flowchart of a method for managing an instant communication application program according to an embodiment of the present disclosure; and
Fig. 3 shows a schematic diagram of modules for managing an instant communication application program according to an embodiment of the present disclosure.

### Detailed Description of the Embodiments

In order to give an effective implementation solution, the present disclosure provides the following embodiments. The embodiments of the present disclosure are illustrated below in combination with the accompanying drawings.

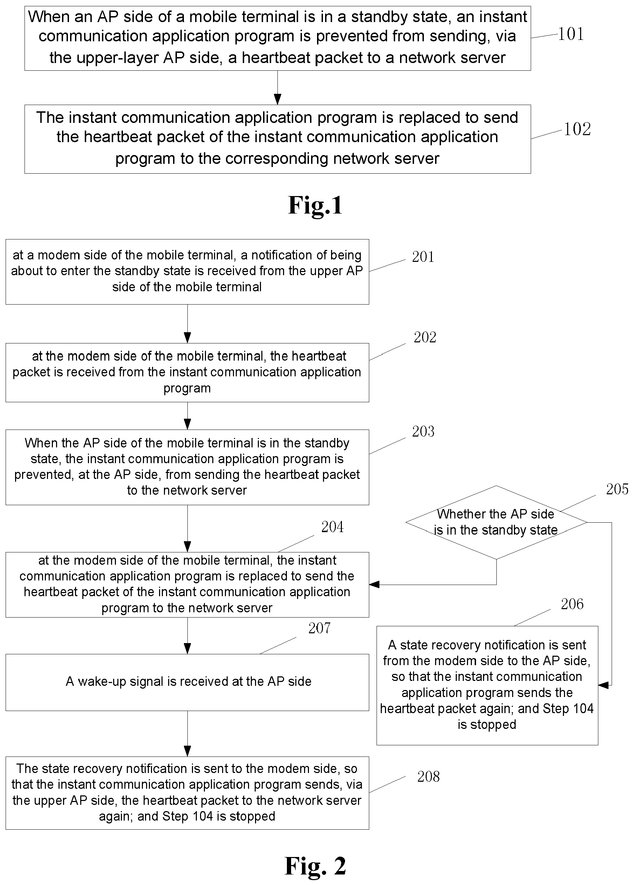

The present disclosure first provides a method for managing an instant communication application program, which includes the following steps shown in Fig. 1:
Step 101: when an upper-layer AP side of a mobile terminal is in a standby state, an instant communication application program is prevented from sending, via the upper-layer AP side, a heartbeat packet to a network server; and
Step 102: the instant communication application program is replaced to send the heartbeat packet of the instant communication application program to the corresponding network server.

It can be seen from above that in the provided method for managing an instant communication application program, when the upper-layer AP side is in the standby state, the function of sending, via the upper-layer AP side, the heartbeat packet to the network server is temporarily stopped, so the instant communication application program has no need to stay online during the standby period, which saves the power consumption when the mobile terminal is in the standby state. At the same time, in the provided method for managing an instant communication application program , the instant communication application program is replaced to send the heartbeat packet to the corresponding network server, and its mode and frequency of sending the heartbeat packet are approximate to that of the instant communication application program, thus no need to reduce or increase the number of times and frequency of sending the heartbeat packet, so the instant communication application program can stay online while achieving the aim of saving power consumption during standby period without parsing or decompressing the heartbeat packet by the network server side.

In Step 101, an upper-layer application of the mobile terminal is installed and runs at the AP side. In order to know that the AP of the mobile terminal is in the standby state, the AP can send a notification about entering the standby state when being about to enter the standby state; the interval between sending the notification about entering the standby state and entering the standby state can be set as small as possible, so as to know that the AP enters the standby state while receiving or intercepting the notification about entering the standby state.

It is feasible to prevent the instant communication application program from sending the heartbeat packet to the network server by disabling, when the AP side is in the standby state, the function of sending the heartbeat packet of the instant communication application program.

In Step 102, the heartbeat packet in the step of replacing the instant communication application program to send the heartbeat packet can be the heartbeat packet of the instant communication application program, and the heartbeat packet is stored in advance. For example, a QQ heartbeat packet is stored when QQ is installed. When it is detected that the AP side is in the standby state or the notification about the AP side enters the standby state is received, the stored QQ heartbeat packet is sent to the network server corresponding to QQ. The heartbeat packet in the step of replacing the instant communication application program to send the heartbeat packet can also be the heartbeat packet temporarily sent when the AP side enters the standby state or is in the standby state. For example, when it is detected that the AP side is in the standby state or the notification about the AP side enters the standby state is received, the heartbeat packet, which is sent to the network server by QQ in a normal network connection, is received or intercepted, and the heartbeat packet can be stored temporarily after being received and is sent to the network server according to the normal interval.

In an embodiment of the present disclosure, the mobile terminal can be any mobile terminal that allows the instant communication application program to send, via the upper AP side, the heartbeat packet to the corresponding network server in the standby side, such as the mobile terminal with Android operating system, the mobile terminal with Windows operating system, or the mobile terminal with IOS operating system.

In an embodiment of the present disclosure, after the instant communication application program is replaced to send the heartbeat packet of the instant communication application program to the network server, the method further includes:
Step 103: it is detected whether the upper-layer AP side is in the standby state, and a first detection result is obtained;
Step 104: when the first detection result indicates that the upper-layer AP side is not in the standby state, a state recovery notification is sent to the upper-layer AP side, so that the instant communication application program sends, via the upper-layer AP side, the heartbeat packet to the network server again; and the operation of replacing the instant communication application program to send the heartbeat packet to the network server is stopped; and
Step 105: when the first detection result indicates that the upper-layer AP side is in the standby state, returning to the step of replacing the instant communication application program to send the heartbeat packet of the instant communication application program to the corresponding network server.

Through the steps 103 to 105, when the mobile terminal wakes up from the standby state, the instant communication application program restarts to send the heartbeat packet to the network server, and stop replacing the instant communication application program to send the heartbeat packet to the network server. When the instant communication application program restarts to send the heartbeat packet to the network server, there is no need to reconnect or login to the network, so the connection between the instant communication application program and the network is not impacted.

In another embodiment of the present disclosure, when the upper-layer AP side enters a non-standby state from the standby state, maybe it is a user or an external factor lighting the screen of the mobile terminal. In such a situation, the user does not really need to use the instant communication application program, so it is feasible to enable the instant communication application program to send, via the upper-layer AP side, the heartbeat packet to the network server again after it is detected that a certain instant communication application program starts, thereby further achieving the effect of saving power.

In another embodiment of the present disclosure, when Step 103 is performed, it is feasible to generate a first determination result for indicating that the upper-layer AP side is not in the standby state after it is detected that the upper-layer AP side restores the non-standby state from the standby state and lasts for a set period of time.

When the mobile terminal is in the standby state, the AP side is also in the standby state. In an embodiment of the present disclosure, it is feasible to replace the instant communication application program to send the heartbeat packet to the network server in part of the standby period. For example, when the mobile terminal in a sleep state of the user starts and enters the standby state, because the time of the whole standby process is relatively long, for ensuring the messages to be received by the instant communication application program are received in time, it is feasible to replace the instant communication application program to send the heartbeat packet in certain time of standby. For maximizing the power-saving effect, it is also feasible to replace the instant communication application program to send the heartbeat packet during the whole process of standby of the mobile terminal.

In order to replace the instant communication application program to send the heartbeat packet to the network server in the whole process of standby of the mobile terminal, in an embodiment of the present disclosure, before the AP side of the mobile terminal prevents the instant communication application program from sending the heartbeat packet to the network server, the method further includes the following steps:
Step 1001: a notification of being about to enter the standby state is received from the upper AP side of the mobile terminal; and
Step 1002: the heartbeat packet is received from the instant communication application program.

In step 1001, when being about to enter the standby state, the upper AP side of the mobile terminal sends the notification of being about to enter the standby state actively. The instant communication application program has no need to send the heartbeat packet to the network server in the whole process from entering the standby state to restoring the standby state of the AP side.

If it is needed to replace the instant communication application program to send the heartbeat packet in certain time period of the whole standby process of the AP side, it can be implemented by setting the time period in advance. For example, a timer can be set in advance, and the function of sending the heartbeat packet to the network server of the instant communication application program is restored after the action of replacing the instant communication application program lasts for the set time period repeatedly; after another set time period, the function of sending the heartbeat packet to the network server of the instant communication application program is disabled again.

In an embodiment of the present disclosure, after the notification of being about to enter the standby state is received from the AP side of the mobile terminal, the method further includes the following steps:
Step 1003: a wake-up signal is received at the upper-layer AP side; and
Step 1004: the upper-layer AP side enters a wake-up state, and sends a state recovery notification, so that the instant communication application program sends, via the upper-layer AP side, the heartbeat packet to the network server again; and stop replacing the instant communication application program to send the heartbeat packet to the network server.

In general, the upper-layer AP side enters the wake-up state synchronously while the mobile terminal enters the wake-up state from the standby state, so the state change of the mobile terminal can be responded quickly. Through the steps 1003 to 1004, the action of sending the heartbeat packet of the instant communication application program can be restored in time when the mobile terminal enters the wake-up state.

For the conventional mobile terminal the AP side is developed based on the intelligent operating system, and users can install or uninstall the instant communication application program freely according to their own requirements; and the modem side is mainly in charge of wireless communication with the network side, so as to ensure that the instant communication application program of the AP side keeps real-time communication with the network side. When the AP side blanks the screen and enters the standby state, an instant communication application program client side of the AP side usually sends, through the modem, the heartbeat packet to an instant communication application program server side of the network side. The AP side of the mobile terminal consumes more power than the modem side, and the modem side is only in charge of wireless communication with the network side, so it consumes less power; if the action of waking up the AP side frequently is implemented by the modem side, the high power consumption caused by frequently waking up the AP side is reduced largely.

In view of the above, in an embodiment of the present disclosure, when the instant communication application program is replaced to send the heartbeat packet of the instant communication application program to the corresponding network server, the instant communication application program is replaced, at the modem side of the mobile terminal, to send the heartbeat packet of the instant communication application program to the corresponding network server.

In the above embodiments of the present disclosure, based on the current software architecture of combining the AP and the modem of the mobile terminal, under the condition of not waking up the AP side frequently, the AP side is replaced by the modem side to independently complete the interaction between the instant communication application program client of the AP side and the instant communication application program server side of the network side, which can reduce the standby power consumption of the mobile terminal largely.

Particularly, in an embodiment of the present disclosure, the method for managing an instant communication application program includes the following steps shown in Fig. 2:
Step 201: the notification of being about to enter the standby state is received, at the modem side of the mobile terminal, from the upper AP side of the mobile terminal;
Step 202: the heartbeat packet is received, at the modem side of the mobile terminal, from the instant communication application program;
Step 203: when the AP side of the mobile terminal is in the standby state, the instant communication application program is prevented, at the AP side, from sending, via the upper AP side, the heartbeat packet to the network server;
Step 204: at the modem side of the mobile terminal, the instant communication application program is replaced to send the heartbeat packet of the instant communication application program to the corresponding network server;
Step 205: it is detected whether the AP side is in the standby state, and the first detection result is obtained; when the first detection result indicates that the upper-layer AP side is in the standby state, go to Step 204;
Step 206: when the first detection result indicates that the upper-layer AP side is not in the standby state, the state recovery notification is sent from the modem side to the AP side, so that the instant communication application program sends, via the AP side, the heartbeat packet to the network server again; and stop, at the modem side, replacing the instant communication application program to send the heartbeat packet to the network server;
Step 207: the wake-up signal is received at the AP side; and
Step 208: after the AP side enters the wake-up state, the state recovery notification is sent to the modem side, so that the instant communication application program sends, via the upper-layer AP side, the heartbeat packet to the network server again; and stop replacing the instant communication application program to send the heartbeat packet to the network server.

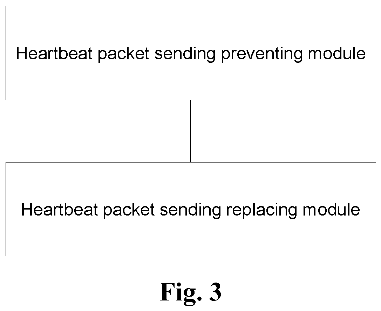

Furthermore, the embodiments of the present disclosure provide a device for managing an instant communication application program; as shown in Fig. 3, the structure of the device includes:
a heartbeat packet sending preventing module, which is configured to, when the upper-layer AP side of the mobile terminal is in the standby state, prevent the instant communication application program from sending, via the upper-layer AP side, the heartbeat packet to the network server; and
a heartbeat packet sending replacing module, which is configured to replace the instant communication application program to send the heartbeat packet of the instant communication application program to the corresponding network server.

In some embodiments of the present disclosure, the device further includes:
a standby state monitoring module, which is configured to detect whether the upper-layer AP side is in the standby state, and obtain the first detection result;
a state recovery notification sending module, which is configured to, when the first detection result indicates that the upper-layer AP side is not in the standby state, send the state recovery notification to the upper-layer AP side, so that the instant communication application program sends, via the upper-layer AP side, the heartbeat packet to the network server again; the state recovery notification sending module is further configured to, when the first detection result indicates that the upper-layer AP side is in the standby state, trigger the heartbeat packet sending replacing module;
the heartbeat packet sending replacing module is configured to, when the first detection result indicates that the upper-layer AP side is not in the standby state, stop replacing the instant communication application program to send the heartbeat packet to the network server.

In an embodiment of the present disclosure, the device further includes:
a notification of being about to enter the standby state receiving module, which is configured to receive the notification of being about to enter the standby state from the upper-layer AP side of the mobile terminal; and
a heartbeat packet receiving module, which is configured to receive the heartbeat packet from the instant communication application program.

In an embodiment of the present disclosure, the device further includes:
a wake-up signal receiving module, which is configured to receive the wake-up signal at the upper-layer AP side;
a state recovery notification sending module, which is configured to, after the upper-layer AP side enters the wake-up state, send the state recovery notification, so that the instant communication application program sends, via the upper-layer AP side, the heartbeat packet to the network server again;
the heartbeat packet sending replacing module is configured to, after the upper-layer AP side enters the wake-up state, stop replacing the instant communication application program to send the heartbeat packet to the network server.

In an embodiment of the present disclosure, the heartbeat packet sending replacing module replaces, at the modem side of the mobile terminal, the instant communication application program to send the heartbeat packet of the instant communication application program to the corresponding network server.

It can be seen from above that in the provided devices for managing an instant communication application program , when the AP side is in the standby state, the instant communication application program is prevented from sending the heartbeat packet to the network server through the upper-layer AP side, and replace the instant communication application program of the AP side to independently complete the operation of sending the heartbeat packet, thereby saving the standby power consumption of the mobile terminal.

Furthermore, the embodiments of the present disclosure also provide a mobile terminal, which includes the upper-layer AP and the device for managing the instant communication application program provided in any embodiments of the present disclosure.

The method and device for managing an instant communication application program, and the mobile terminal thereof which are provided by the embodiments of the present disclosure can replace the instant communication application program to send the heartbeat packet to the network server when the mobile terminal is in the standby state, thereby reducing the standby power consumption without needing the cooperation of the network server side and without changing the frequency of sending the heartbeat packet. The method and device for managing an instant communication application program, and the mobile terminal thereof can improve the power-saving effect without impacting the network connection of the instant communication application program during standby.

It should be understood that the multiple embodiments described here are only used for illustrating but not intended to limit the present disclosure. The embodiments of the present disclosure and the characteristics in the embodiments can be combined under the condition of not conflicting.

Obviously, those skilled in the art can make various modifications and deformations without departing from the scope of the present disclosure. If these modifications and deformations of the present disclosure belong to the scope of the claims of the present disclosure and its equivalent technology, then the present disclosure is intended to include these modifications and deformations.

### Industrial Applicability

As mentioned above, the method and device for managing an instant communication application program, and the mobile terminal thereof which are provided by the embodiments of the present disclosure have the following beneficial effects: they can replace the instant communication application program to send the heartbeat packet to the network server when the mobile terminal is in the standby state, thereby reducing the standby power consumption without needing the cooperation of the network server side and without changing the frequency of sending the heartbeat packet; besides, they can improve the power-saving effect without impacting the network connection of the instant communication application program during standby.

## Claims

1. A method for managing an instant communication application program, comprising:
when an upper-layer Application Processor, AP, side of a mobile terminal is in a standby state, preventing an instant communication application program from sending a heartbeat packet to a network server via the upper-layer AP side (101, 203); and
when the instant communication application program is replaced by a modem side of the mobile terminal, sending the heartbeat packet of the instant communication application program to the corresponding network server via the modem side of the mobile terminal (102, 204).

2. The method according to claim 1, wherein after sending the heartbeat packet to the network server (102, 205), further comprising:
detecting whether the upper-layer AP side is in the standby state, and obtaining a first detection result (103, 206);
when the first detection result indicates that the upper-layer AP side is not in the standby state, sending a state recovery notification to the upper-layer AP side, so that the instant communication application program sends, via the upper-layer AP side, the heartbeat packet to the network server again; and stop replacing the instant communication application program to send the heartbeat packet to the network server (104);
when the first detection result indicates that the upper-layer AP side is in the standby state, returning to the step of replacing the instant communication application program to send the heartbeat packet of the instant communication application program to the corresponding network server (105).

3. The method according to claim 1, wherein before preventing the instant communication application program from sending the heartbeat packet to the network server (203), further comprising:
receiving a notification of being about to enter the standby state from the upper-layer AP side of the mobile terminal (201); and
receiving the heartbeat packet from the instant communication application program (202).

4. The method according to claim 3, wherein after receiving the notification of being about to enter the standby state from the AP side of the mobile terminal (201), further comprising:
Receiving, at the upper-layer AP side, a wake-up signal (207);
after the upper-layer AP side enters a wake-up state, sending a state recovery notification, so that the instant communication application program sends, via the upper-layer AP side, the heartbeat packet to the network server again; and stopping replacing the instant communication application program to send the heartbeat packet to the network server (208).

5. The method according to any one of claims 1 to 4, wherein when replacing the instant communication application program to send the heartbeat packet of the instant communication application program to the corresponding network server (102, 204), replacing, at a modem side of the mobile terminal, the instant communication application program to send the heartbeat packet of the instant communication application program to the corresponding network server.

6. A device in a mobile terminal for managing an instant communication application program, comprising:
a heartbeat packet sending preventing module, configured to, when an upper-layer Application Processor, AP, side of the mobile terminal is in a standby state, prevent the instant communication application program from sending a heartbeat packet to a network server via the upper-layer AP side (101, 203); and
a heartbeat packet sending replacing module, configured to replace the instant communication application program to send the heartbeat packet of the instant communication application program to the corresponding network server via a modem side of the mobile terminal (102, 204).

7. The device according to claim 6, further comprising:
a standby state monitoring module, configured to detect whether the upper-layer AP side is in the standby state, and obtain a first detection result (103, 205);
a state recovery notification sending module, configured to, when the first detection result indicates that the upper-layer AP side is not in the standby state, send a state recovery notification to the upper-layer AP side, so that the instant communication application program sends the heartbeat packet to the network server via the upper-layer AP side again (104, 206);
the state recovery notification sending module is further configured to, when the first detection result indicates that the upper-layer AP side is in the standby state, trigger the heartbeat packet sending replacing module;
the heartbeat packet sending replacing module is configured to, when the first detection result indicates that the upper-layer AP side is not in the standby state, stop replacing the instant communication application program to send the heartbeat packet to the network server (206).

8. The device according to claim 6, further comprising:
a notification of being about to enter the standby state receiving module, configured to receive a notification of being about to enter the standby state from the upper-layer AP side of the mobile terminal (201); and
a heartbeat packet receiving module, configured to receive the heartbeat packet from the instant communication application program (202).

9. The device according to claim 8, further comprising:
a wake-up signal receiving module, configured to receive, at the upper-layer AP side, a wake-up signal (207);
a state recovery notification sending module, configured to, after the upper-layer AP side enters a wake-up state, send a state recovery notification, so that the instant communication application program sends, via the upper-layer AP side, the heartbeat packet to the network server again (208);
the heartbeat packet sending replacing module is configured to, after the upper-layer AP side enters the wake-up state, stop replacing the instant communication application program to send the heartbeat packet to the network server (208).

10. The device according to any one of claims 6 to 9, wherein the heartbeat packet sending replacing module replaces, at a modem side of the mobile terminal, the instant communication application program to send the heartbeat packet of the instant communication application program to the corresponding network server.

11. A mobile terminal, comprising an upper-layer Application Processor, AP, and a device as claimed in any one of claims 6 to 10.

## Patentansprüche

1. Verfahren zum Verwalten eines Anwendungsprogramms zur Sofortkommunikation, umfassend:
wenn eine höherschichtige Anwendungsprozessor-, AP-Seite eines mobilen Endgeräts in einem Standby-Zustand ist, Hindern eines Anwendungsprogramms zur Sofortkommunikation am Senden eines Heartbeat-Pakets an einen Netzwerkserver über die höherschichtige AP-Seite (101, 203); und
wenn das Anwendungsprogramm zur Sofortkommunikation ersetzt wird, durch eine Modemseite des mobilen Endgeräts, Senden des Heartbeat-Pakets des Anwendungsprogramms zur Sofortkommunikation an den entsprechenden Netzwerkserver über die Modemseite des mobilen Endgeräts (102, 204).

2. Verfahren nach Anspruch 1, wobei nach dem Senden des Heartbeat-Pakets an den Netzwerkserver (102, 205) weiter umfassend:
Feststellen, ob die höherschichtige AP-Seite in dem Standby-Zustand ist, und Erhalten eines ersten Feststellergebnisses (103, 206);
wenn das erste Feststellergebnis angibt, dass die höherschichtige AP-Seite nicht in dem Standby-Zustand ist, Senden einer Zustandswiederherstellungsmeldung an die höherschichtige AP-Seite, so dass das Anwendungsprogramm zur Sofortkommunikation über die höherschichtige AP-Seite das Heartbeat-Paket noch einmal an den Netzwerkserver sendet; und Stoppen des Ersetzens des Anwendungsprogramms zur Sofortkommunikation, um das Heartbeat-Paket an den Netzwerkserver zu senden (104);
wenn das erste Feststellergebnis angibt, dass die höherschichtige AP-Seite in dem Standby-Zustand ist, Zurückkehren zu dem Schritt des Ersetzens des Anwendungsprogramms zur Sofortkommunikation, um das Heartbeat-Paket des Anwendungsprogramms zur Sofortkommunikation an den entsprechenden Netzwerkserver zu senden (105).

3. Verfahren nach Anspruch 1, wobei vor dem Hindern des Anwendungsprogramms zur Sofortkommunikation am Senden des Heartbeat-Pakets an den Netzwerkserver (203) weiter umfassend:
Empfangen einer Meldung des In-Begriff-Seins, in den Standby-Zustand zu treten, von der höherschichtigen AP-Seite des mobilen Endgeräts (201); und
Empfangen des Heartbeat-Pakets von dem Anwendungsprogramm zur Sofortkommunikation (202).

4. Verfahren nach Anspruch 3, wobei nach dem Empfangen der Meldung des In-Begriff-Seins, in den Standby-Zustand zu treten, von der AP-Seite des mobilen Endgeräts (201), weiter umfassend:
Empfangen, an der höherschichtigen AP-Seite, eines Aufwachsignals (207);
nach dem Eintreten der höherschichtigen AP-Seite in einen Aufwachzustand, Senden einer Zustandswiederherstellungsmeldung, so dass das Anwendungsprogramm zur Sofortkommunikation über die höherschichtige AP-Seite das Heartbeat-Paket noch einmal an den Netzwerkserver sendet; und Stoppen des Ersetzens des Anwendungsprogramms zur Sofortkommunikation, um das Heartbeat-Paket an den Netzwerkserver zu senden (208).

5. Verfahren nach einem der Ansprüche 1 bis 4, wobei, beim Ersetzen des Anwendungsprogramms zur Sofortkommunikation, um das Heartbeat-Paket des Anwendungsprogramms zur Sofortkommunikation an den entsprechenden Netzwerkserver (102, 204) zu senden, Ersetzen, an einer Modemseite des mobilen Endgeräts, des Anwendungsprogramms zur Sofortkommunikation, um das Heartbeat-Paket des Anwendungsprogramms zur Sofortkommunikation an den entsprechenden Netzwerkserver zu senden.

6. Vorrichtung in einem mobilen Endgerät zum Verwalten eines Anwendungsprogramms zur Sofortkommunikation, umfassend:
ein Heartbeat-Paket-Sendeverhinderungsmodul, das ausgestaltet ist, wenn eine höherschichtige Anwendungsprozessor-, AP-Seite des mobilen Endgeräts in einem Standby-Zustand ist, das Anwendungsprogramm zur Sofortkommunikation am Senden eines Heartbeat-Pakets an einen Netzwerkserver über die höherschichtige AP-Seite (101, 203) zu hindern; und
ein Heartbeat-Paket-Sendeersatzmodul, das ausgestaltet ist, das Anwendungsprogramm zur Sofortkommunikation zu ersetzen, um das Heartbeat-Pakets des Anwendungsprogramms zur Sofortkommunikation an den entsprechenden Netzwerkserver über eine Modemseite des mobilen Endgeräts (102, 204) zu senden.

7. Vorrichtung nach Anspruch 6, weiter umfassend:
ein Standby-Zustand-Überwachungsmodul, das ausgestaltet ist, festzustellen, ob die höherschichtige AP-Seite in dem Standby-Zustand ist, und ein erstes Feststellergebnis (103, 205) zu erhalten;
ein Zustandswiederherstellungsmeldungs-Sendemodul, das ausgestaltet ist, wenn das erste Feststellergebnis angibt, dass die höherschichtige AP-Seite nicht in dem Standby-Zustand ist, eine Zustandswiederherstellungsmeldung an die höherschichtige AP-Seite zu senden, so dass das Anwendungsprogramm zur Sofortkommunikation das Heartbeat-Paket über die höherschichtige AP-Seite noch einmal an den Netzwerkserver sendet (104, 206);
wobei das Zustandswiederherstellungsmeldungs-Sendemodul weiter ausgestaltet ist, wenn das erste Feststellergebnis angibt, dass die höherschichtige AP-Seite in dem Standby-Zustand ist, das Heartbeat-Paket-Sendeersatzmodul zu aktivieren;
wobei das Heartbeat-Paket-Sendeersatzmodul ausgestaltet ist, wenn das erste Feststellergebnis angibt, dass die höherschichtige AP-Seite nicht in dem Standby-Zustand ist, das Ersetzen des Anwendungsprogramms zur Sofortkommunikation zu stoppen, um das Heartbeat-Paket an den Netzwerkserver zu senden (206) .

8. Vorrichtung nach Anspruch 6, weiter umfassend:
ein Empfangsmodul für eine Meldung des In-Begriff-Seins, in den Standby-Zustand zu treten, das ausgestaltet ist, eine Meldung des In-Begriff-Seins, in den Standby-Zustand zu treten, von der höherschichtigen AP-Seite des mobilen Endgeräts (201) zu empfangen; und
ein Heartbeat-Paket-Empfangsmodul, das ausgestaltet ist, das Heartbeat-Paket von dem Anwendungsprogramm zur Sofortkommunikation (202) zu empfangen.

9. Vorrichtung nach Anspruch 8, weiter umfassend:
ein Aufwachsignal-Empfangsmodul, das ausgestaltet ist, an der höherschichtigen AP-Seite, ein Aufwachsignal (207) zu empfangen;
ein Zustandswiederherstellungsmeldungs-Sendemodul, das ausgestaltet ist, nach dem Eintreten der höherschichtigen AP-Seite in einen Aufwachzustand, eine Zustandswiederherstellungsmeldung zu senden, so dass das Anwendungsprogramm zur Sofortkommunikation über die höherschichtige AP-Seite das Heartbeat-Paket noch einmal an den Netzwerkserver sendet (208);
wobei das Heartbeat-Paket-Sendeersatzmodul ausgestaltet ist, nach dem Eintreten der höherschichtigen AP-Seite in den Aufwachzustand, das Ersetzen des Anwendungsprogramms zur Sofortkommunikation zu stoppen, um das Heartbeat-Paket an den Netzwerkserver zu senden (208).

10. Vorrichtung nach einem der Ansprüche 6 bis 9, wobei das Heartbeat-Paket-Sendeersatzmodul, an einer Modemseite des mobilen Endgeräts, das Anwendungsprogramm zur Sofortkommunikation ersetzt, um das Heartbeat-Paket des Anwendungsprogramms zur Sofortkommunikation an den entsprechenden Netzwerkserver zu senden.

11. Mobiles Endgerät, umfassend einen höherschichtigen Anwendungsprozessor, AP, und eine Vorrichtung nach einem der Ansprüche 6 bis 10.

## Revendications

1. Procédé permettant de gérer un programme d'application de communication instantanée, comprenant :
lorsqu'un côté processeur d'application, AP, de couches supérieures d'un terminal mobile est dans un état de veille, le fait d'empêcher un programme d'application de communication instantanée d'envoyer un paquet battement de cœur à un serveur de réseau via le côté AP de couches supérieures (101, 203) ; et
lorsque le programme d'application de communication instantanée est remplacé par un côté modem du terminal mobile, l'envoi du paquet battement de cœur du programme d'application de communication instantanée au serveur de réseau correspondant via le côté modem du terminal mobile (102, 204).

2. Procédé selon la revendication 1, dans lequel après l'envoi du paquet battement de cœur au serveur de réseau (102, 205), comprenant en outre :
le fait de détecter si le côté AP de couches supérieures est dans l'état de veille, et l'obtention d'un premier résultat de détection (103, 206) ;
lorsque le premier résultat de détection indique que le côté AP de couches supérieures n'est pas dans l'état de veille, l'envoi d'une notification de reprise d'état au côté AP de couches supérieures, de sorte que le programme d'application de communication instantanée envoie à nouveau, via le côté AP de couches supérieures, le paquet battement de cœur au serveur de réseau ; et l'arrêt du remplacement du programme d'application de communication instantanée pour envoyer le paquet battement de cœur au serveur de réseau (104) ;
lorsque le premier résultat de détection indique que le côté AP de couches supérieures est dans l'état de veille, le retour à l'étape de remplacement du programme d'application de communication instantanée pour envoyer le paquet battement de cœur du programme d'application de communication instantanée au serveur de réseau (105) correspondant.

3. Procédé selon la revendication 1, dans lequel avant d'empêcher le programme d'application de communication instantanée d'envoyer le paquet battement de cœur au serveur de réseau (203), comprenant en outre :
la réception d'une notification du fait d'être sur le point d'entrer dans l'état de veille à partir du côté AP de couches supérieures du terminal mobile (201) ; et
la réception du paquet battement de cœur à partir du programme d'application de communication instantanée (202) .

4. Procédé selon la revendication 3, dans lequel après la réception de la notification du fait d'être sur le point d'entrer dans l'état de veille à partir du côté AP du terminal mobile (201), comprenant en outre :
la réception, au niveau du côté AP de couches supérieures, d'un signal de réveil (207) ;
après que le côté AP de couches supérieures est entré dans un état de réveil, l'envoi d'une notification de reprise d'état, de sorte que le programme d'application de communication instantanée envoie à nouveau, via le côté AP de couches supérieures, le paquet battement de cœur au serveur de réseau ; et l'arrêt du remplacement du programme d'application de communication instantanée pour envoyer le paquet battement de cœur au serveur de réseau (208).

5. Procédé selon l'une quelconque des revendications 1 à 4, dans lequel lors du remplacement du programme d'application de communication instantanée pour envoyer le paquet battement de cœur du programme d'application de communication instantanée au serveur de réseau (102, 204) correspondant, le remplacement, au niveau d'un côté modem du terminal mobile, du programme d'application de communication instantanée pour envoyer le paquet battement de cœur du programme d'application de communication instantanée au serveur de réseau correspondant.

6. Dispositif dans un terminal mobile permettant de gérer un programme d'application de communication instantanée, comprenant :
un module d'empêchement d'envoi de paquet battement de cœur, configuré pour, lorsqu'un côté processeur d'application, AP, de couches supérieures du terminal mobile est dans un état de veille, empêcher le programme d'application de communication instantanée d'envoyer un paquet battement de cœur à un serveur de réseau via le côté AP de couches supérieures (101, 203) ; et
un module de remplacement d'envoi de paquet battement de cœur, configuré pour remplacer le programme d'application de communication instantanée pour envoyer le paquet battement de cœur du programme d'application de communication instantanée au serveur de réseau correspondant via un côté modem du terminal mobile (102, 204).

7. Dispositif selon la revendication 6, comprenant en outre :
un module de surveillance d'état de veille, configuré pour détecter si le côté AP de couches supérieures est dans l'état de veille, et obtenir un premier résultat de détection (103, 205) ;
un module d'envoi de notification de reprise d'état, configuré pour, lorsque le premier résultat de détection indique que le côté AP de couches supérieures n'est pas dans l'état de veille, envoyer une notification de reprise d'état au côté AP de couches supérieures, de sorte que le programme d'application de communication instantanée envoie à nouveau le paquet battement de cœur au serveur de réseau via le côté AP de couches supérieures (104, 206) ;
le module d'envoi de notification de reprise d'état est en outre configuré pour, lorsque le premier résultat de détection indique que le côté AP de couches supérieures est dans l'état de veille, déclencher le module de remplacement d'envoi de paquet battement de cœur ;
le module de remplacement d'envoi de paquet battement de cœur est configuré pour, lorsque le premier résultat de détection indique que le côté AP de couches supérieures n'est pas dans l'état de veille, arrêter de remplacer le programme d'application de communication instantanée pour envoyer le paquet battement de cœur au serveur de réseau (206).

8. Dispositif selon la revendication 6, comprenant en outre :
un module de réception de notification du fait d'être sur le point d'entrer dans l'état de veille, configuré pour recevoir une notification du fait d'être sur le point d'entrer dans l'état de veille à partir du côté AP de couches supérieures du terminal mobile (201) ; et
un module de réception de paquet battement de cœur, configuré pour recevoir le paquet battement de cœur à partir du programme d'application de communication instantanée (202).

9. Dispositif selon la revendication 8, comprenant en outre :
un module de réception de signal de réveil, configuré pour recevoir, au niveau du côté AP de couches supérieures, un signal de réveil (207) ;
un module d'envoi de notification de reprise d'état, configuré pour, après que le côté AP de couches supérieures est entré dans un état de réveil, envoyer une notification de reprise d'état, de sorte que le programme d'application de communication instantanée envoie à nouveau, via le côté AP de couches supérieures, le paquet battement de cœur au serveur de réseau (208) ;
le module de remplacement d'envoi de paquet battement de cœur est configuré pour, après que le côté AP de couches supérieures est entré dans l'état de réveil, arrêter de remplacer le programme d'application de communication instantanée pour envoyer le paquet battement de cœur au serveur de réseau (208).

10. Dispositif selon l'une quelconque des revendications 6 à 9, dans lequel le module de remplacement d'envoi de paquet battement de cœur remplace, au niveau d'un côté modem du terminal mobile, le programme d'application de communication instantanée pour envoyer le paquet battement de cœur du programme d'application de communication instantanée au serveur de réseau correspondant.

11. Terminal mobile, comprenant un processeur d'application, AP, de couches supérieures et un dispositif selon l'une quelconque des revendications 6 à 10.
